(19) Europäisches Patentamt
European Patent Office
Office européen des brevets

(11) **EP 3 617 564 B1**

(12) **EUROPÄISCHE PATENTSCHRIFT**

(45) Veröffentlichungstag und Bekanntmachung des Hinweises auf die Patenterteilung:
**20.01.2021 Patentblatt 2021/03**

(51) Int Cl.:
*F16H 63/00* (2006.01)          *F16H 63/18* (2006.01)

(21) Anmeldenummer: **19192707.8**

(22) Anmeldetag: **20.08.2019**

(54) **SCHALTWALZENANORDNUNG UND GETRIEBEANORDNUNG**

SHIFT DRUM ARRANGEMENT AND TRANSMISSION ARRANGEMENT

DISPOSITIF À TAMBOUR DE CHANGEMENT DE RAPPORT ET DISPOSITIF DE TRANSMISSION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.08.2018 DE 102018214755**

(43) Veröffentlichungstag der Anmeldung:
**04.03.2020 Patentblatt 2020/10**

(73) Patentinhaber: **Magna PT B.V. & Co. KG 74199 Untergruppenbach (DE)**

(72) Erfinder:
• **KAPP, Stefan 74399 Walheim (DE)**
• **BURGARDT, Georg 74626 Bretzfeld (DE)**

(74) Vertreter: **Rausch, Gabriele Magna International (Germany) GmbH Kurfürst-Eppstein-Ring 11 63877 Sailauf (DE)**

(56) Entgegenhaltungen:
EP-A1- 1 286 088      WO-A1-2015/149797
WO-A1-2016/027017     DE-T2- 69 216 375

EP 3 617 564 B1

**Beschreibung**

Die vorliegende Erfindung betrifft eine Schaltwalzenanordnung für eine Schaltvorrichtung einer Getriebeanordnung, insbesondere für Kraftfahrzeuge, mit einem Schaltwalzenkörper, der um eine Schaltwalzenachse drehbar ist, und mit einer Anschlageinrichtung zum Referenzieren einer Drehstellung des Schaltwalzenkörpers.

Ferner betrifft die vorliegende Erfindung eine Getriebeanordnung für ein Kraftfahrzeug, mit einem Gehäuse, mit einer Schaltvorrichtung zum Schalten von Gangstufen, wobei die Schaltvorrichtung eine Schaltwalzenanordnung der genannten Art aufweist.

Schaltvorrichtungen für Getriebeanordnungen sind im Stand der Technik allgemein bekannt.

Das Dokument DE 196 55 083 B4 offenbart eine Schaltvorrichtung eines Getriebes mit einer in das Getriebegehäuse integrierten Schaltwalze. Ein Kupplungsbetätigungsaktor ist separat hiervon ausgebildet.

Ferner ist aus dem Dokument WO 97/02963 A eine Schaltvorrichtung für Getriebe und Kupplungen bekannt, bei der eine Getriebebetätigung und eine Kupplungsbetätigung mittels getrennt voneinander ausgebildeter Aktuatoren vorgenommen werden.

Das Dokument WO 02/066870 A1 offenbart eine Getriebebetätigung, bei der eine Übersetzungsstufe automatisiert ausgelegt wird, wenn eine andere Übersetzungsstufe eingelegt wird.

Das Dokument WO 2015/149797 A1 offenbart eine Betätigungsvorrichtung zum Betätigen eines Getriebes, mit einem drehbaren Walzenelement, wobei ein mit dem Walzenelement drehfest verbundenes Referenzierungselement derart mit einer Signalindikationseinrichtung zusammenwirkt, dass bei einem relativen Verschieben von der Signalindikationseinrichtung und dem Referenzierungselement in einer bestimmten Drehstellung des Walzenelementes ein Positionssignal erzeugbar ist. Das Positionsignal ist durch einen die Antriebskraft des Antriebsmotors in der bestimmten Drehstellung verändernden, mechanischen Widerstand erzeugbar. Die Anordnung zeigt kein Anschlagelement , das in Drehrichtung begrenzt verdrehbar in Bezug auf den Schaltwalzenkörper gelagert ist.

Das Dokument DE 101 13 161 A1 offenbart eine Stelleinrichtung für automatisierte Handschaltgetriebe. Eine Schaltwalze ist in Bezug auf eine gehäusefeste Achse verdrehbar. An der gehäusefesten Achse ist ein Finger festgelegt, der in eine stirnseitige Vertiefung der Schaltwalze eingreift.

Aus dem Dokument EP 1 286 088 A1 ist es bekannt, an einer Schaltwalze einen Magnetring festzulegen, der zur Drehpositionserfassung der jeweiligen Schaltwalze mittels geeigneter Sensoren ausgebildet ist.

DE 10 2016 124 403 A1 zeigt eine Schaltwalze für ein automatisiertes Fahrzeuggetriebe, mit einem um eine Drehachse drehbaren Schaltwalzenkörper, an dem wenigstens eine erste Schaltkontur ausgebildet ist, die sich über einen Umfangsabschnitt des Schaltwalzenkörpers erstreckt und an der ein erster Mitnehmer angreifen kann, der einem ersten Schaltkupplungspaket des Kraftfahrzeuggetriebes zugeordnet ist, wobei die erste Schaltkontur einen ersten Gangabschnitt aufweist, der einer ersten Schaltkupplungsposition des ersten Schaltkupplungspaketes zugeordnet ist, und einen zweiten Gangabschnitt aufweist, der von dem ersten Gangabschnitt um einen ersten Umfangsabstand beanstandet ist. DE 692 16 375 T5 zeigt eine Vorrichtung zum Betreiben eines Getriebes mit Schaltgabeln, die bewegt werden können, um das Übersetzungsverhältnis des Getriebes selektiv zu ändern, eine Drehtrommel, deren Außenfläche Kurvenbahnen aufweist, die jeweils mit einem Nockenstößel zusammenwirken, der von einem jeweiligen gabelförmigen Element oder einer Stange getragen wird, einem hydraulischen Drehantrieb, der die Trommel dreht und eine Elektronikeinheit zum Antreiben einer elektrohydraulischen Schaltung. Zwischen dem hydraulischen Drehantrieb und der Trommel ist eine Multipliziereinheit mit Umlaufgetriebe angeordnet.

DE 10 2013 221 058 A1 zeigt eine Betätigungsvorrichtung zum Betätigen eines Getriebes zum Auswählen einer Übersetzungsstufe und zum Ein- oder Auslegen der ausgewählten Übersetzungsstufe und/oder zum Betätigen zumindest einer Kupplung, mit zumindest einem drehbaren Walzenelement mit Führungsbahnen in welche jeweils ein Kontaktelement einer Schaltgabel eingreift zum Verlagern der Schaltgabel zum Auswählen und Ein- oder Auslegen einer Übersetzungsstufe eines Getriebes und mit einem Betätigungsbereich für ein Kupplungsbetätigungsmittel zum Betätigen der zumindest einen Kupplung.

In manchen Schaltvorrichtungen ist eine Sensorik vorhanden, die erfasst, ob in der Getriebeanordnung eine Gangstufe eingelegt ist. Da eine eingelegte Gangstufe in der Regel einer bestimmten Drehposition der Schaltwalze entspricht, kann hierüber auf die Drehposition rückgeschlossen werden. Sofern jedoch beispielsweise bei Doppelkupplungsgetrieben in einem Teilgetriebe keine Gangstufe eingelegt ist, kann die Gangsensorik nicht zur Drehpositionserfassung der Schaltwalze verwendet werden.

Wie oben beschrieben, kann zum Referenzieren ein rotatorischer Endanschlag in die Schaltwalzen integriert werden. Hierbei ist jedoch die Verdrehbarkeit der Schaltwalzen begrenzt. Breite und massive Anschläge reduzieren den zur Verfügung stehenden Verdrehwinkel der Schaltwalze zum Teil dramatisch. Sofern Schaltwalzenanordnungen eine über 360° hinausgehende Verdrehung erfordern, ist ein Referenzieren auf diese Art und Weise nicht möglich.

Durch die Hybridisierung von Getrieben entstehen neue Herausforderungen an die Schaltvorrichtungen. Beispielsweise besteht die Forderung, die in einem Getriebe angebundene oder integrierte elektrische Maschine im Stillstand zu laden und/oder auf Parksperren zu verzichten.

Es ist vor diesem Hintergrund eine Aufgabe der Erfindung, eine Schaltwalzenanordnung sowie eine Getriebeanordnung zu schaffen, bei denen die Probleme aus dem Stand der Technik wenigstens teilweise verringert werden und vorzugsweise eine Schaltwalzenanordnung einen gegenüber dem Stand der Technik vergrößerten Verdrehwinkelbereich bereitstellen kann, bei ansonsten gegebenem Layout und/oder gegebenen Randbedingungen.

Die obige Aufgabe wird gelöst durch eine Schaltwalzenanordnung für eine Schaltvorrichtung einer Getriebeanordnung, insbesondere für Kraftfahrzeuge, mit einem Schaltwalzenkörper, der um eine Schaltwalzenachse drehbar ist, und mit einer Anschlageinrichtung zum Referenzieren einer Drehstellung des Schaltwalzenkörpers, wobei die Anschlageinrichtung ein Anschlagelement aufweist, das so ausgebildet ist, dass es in einer ersten Referenzposition in Kontakt kommen kann mit einem Referenzelement, wobei das Anschlagelement in Drehrichtung begrenzt verdrehbar in Bezug auf den Schaltwalzenkörper gelagert ist.

Ferner wird die obige Aufgabe gelöst durch eine Getriebeanordnung für ein Kraftfahrzeug, mit einem Gehäuse, mit einer Schaltvorrichtung zum Schalten von Gangstufen, wobei die Schaltvorrichtung eine Schaltwalzenanordnung der erfindungsgemäßen Art aufweist.

Die erfindungsgemäße Schaltwalzenanordnung ermöglicht durch die relative Verdrehbarkeit des Anschlagelementes in Bezug auf den Schaltwalzenkörper, dass der maximale Verdrehwinkel des Schaltwalzenkörpers vergrößert werden kann.

Bei bekannten Schaltwalzenanordnungen, die einen fest mit dem Schaltwalzenkörper verbundenen Anschlag aufweisen, ergibt sich die maximale Verdrehbarkeit des Schaltwalzenkörpers durch 360° abzüglich des Umfangswinkels des Anschlagelementes und abzüglich eines Umfangswinkels des Referenzelementes, das beispielsweise ein gehäusefestes Element, wie ein Gehäuseanschlag sein kann. Hier kann der maximale Verdrehwinkel im Stand der Technik nur bei 290° liegen, wenn sich beispielsweise das Anschlagelement über 35° erstreckt und wenn sich der Gehäuseanschlag ebenfalls um 35° erstreckt.

Bei der erfindungsgemäßen Schaltwalzenanordnung kann demgegenüber die maximale Verdrehbarkeit des Schaltwalzenkörpers um jenen Winkel vergrößert werden, um den das Anschlagelement in Drehrichtung begrenzt verdrehbar in Bezug auf den Schaltwalzenkörper gelagert ist.

Hierdurch ist es möglich, geforderte Zusatzfunktionalitäten durch Vergrößern der relativen Verdrehbarkeit in die Schaltwalzenanordnung zu integrieren, insbesondere durch das Bereitstellen von weiteren dedizierten Verdrehpositionen des Schaltwalzenkörpers zum Einrichten bestimmter Funktionalitäten. Dies kann mit anderen Worten bedeuten, dass eine Vergrößerung des Umfanges des Schaltwalzenkörpers vermieden werden kann. Folglich können gegebenenfalls zusätzliche Funktionalitäten Package-neutral bereitgestellt werden, wobei vorzugsweise eine Veränderung der Peripherie (Schaltwalzenantrieb, Schaltgabeln, Gehäuse etc.) vermieden werden kann.

In einer Ausführungsform weist der Schaltwalzenkörper zwei Anschlagflächen auf, die in Umfangsrichtung bzw. Drehrichtung versetzt zueinander sind, und zwar über einen Winkelbereich, der größer ist als eine Länge bzw. Winkelerstreckung des Anschlagelementes in Umfangsrichtung.

Die Bereitstellung der Anschlageinrichtung ermöglicht eine Referenzierung der Drehposition des Schaltwalzenkörpers beispielsweise auch dann, wenn der Schaltwalzenkörper sich in einer Drehposition befindet, die einer Neutralstellung der Getriebeanordnung entspricht, wenn also beispielsweise eine mittelbare Drehwinkelerfassung der Drehposition des Schaltwalzenkörpers über eine Gangsensoranordnung nicht möglich ist.

Ein maximaler Verdrehwinkel $\alpha_{MAX}$ kann sich folgendermaßen errechnen:

$$\alpha_{MAX} = (360° - \alpha_G - \alpha_A) + (\alpha_S - \alpha_A),$$

wobei $\alpha_G$ der Umfangswinkel eines Anschlages des Gehäuses ist, wobei $\alpha_A$ ein Umfangswinkel des Anschlagelementes ist, und wobei $\alpha_S$ ein Umfangswinkel zwischen zwei Anschlagflächen des Schaltwalzenkörpers ist.

Unter der Annahme, dass die Winkel $\alpha_A$ und $\alpha_G$ jeweils 35° betragen und der Winkel $\alpha_S$ 325° beträgt, liegt der maximale Verdrehwinkel bei $\alpha_{Max}$ = 360° - 35° - 35° + 325° - 35° = 580°.

Die Anschlagsbreiten können, je nach Materialwahl, auch bis auf 20° reduziert werden, so dass sich ein maximaler Verdrehwinkel von 360° - 20° - 20° + 340° - 20° = 640° ergibt.

Folglich kann eine Funktionsnut des Schaltwalzenkörpers sich beispielsweise um bis zu 640° um den Schaltwalzenkörper herum erstrecken, also nach der Art einer Schraube.

Die Aufgabe wird somit vollkommen gelöst.

Unter der Annahme, dass eine Winkelerstreckung eines Anschlagelementes wenigstens 3° beträgt, ist es bevorzugt, wenn das Anschlagelement in Bezug auf den Schaltwalzenkörper über einen Winkelbereich frei verdrehbar ist, der größer ist als 3° und/oder kleiner ist als 357°, insbesondere größer ist als 6° und kleiner als 35°.

Obgleich theoretisch sehr große Verdrehwinkel zwischen Anschlagelement und Schaltwalzenkörper möglich sind, ist es in vielen Fällen bevorzugt, wenn dieser Winkelbereich kleiner ist, insbesondere kleiner ist als 35°. Hierdurch kann in der Regel wenigstens eine Zusatzfunktion bereitgestellt werden (gegenüber einem Schaltwalzenkörper gleicher Abmessungen und einem starren Anschlagelement).

Ferner ist es vorteilhaft, wenn der Winkelbereich, um den das Anschlagelement in Bezug auf den Schaltwalzenkörper frei verdrehbar ist, größer gleich einem Winkelbereich ist, über den sich das Referenzelement erstreckt.

Hierdurch kann die maximale freie Verdrehbarkeit optimiert werden.

Insgesamt ist es vorteilhaft, wenn der Schaltwalzenkörper um eine Schaltwalzenachse frei verdrehbar gelagert ist und/oder wenn das Anschlagelement um eine bzw. um die Schaltwalzenachse frei verdrehbar gelagert ist.

Generell ist es dabei denkbar, dass die Schaltwalzenachse als Lagerstift ausgebildet ist, der gehäusefest montiert ist, wobei der Schaltwalzenkörper und/oder das Anschlagelement verdrehbar in Bezug auf diesen gehäusefesten Lagerstift gelagert sind, beispielsweise über geeignete Lageranordnungen.

Alternativ ist es denkbar, dass der Schaltwalzenkörper fest mit einer Lagerwelle verbunden ist, die verdrehbar über eine Lageranordnung an einem Gehäuse gelagert ist, wobei das Anschlagelement beispielsweise ebenfalls verdrehbar in Bezug auf das Gehäuse gelagert sein kann, jedoch auch verdrehbar an einer solchen Lagerwelle gelagert sein kann.

Schließlich ist es auch denkbar, dass das Anschlagelement ausschließlich an dem Schaltwalzenkörper gelagert ist, und zwar in Drehrichtung begrenzt verdrehbar. All diese Alternativen sollen von der Formulierung "um eine Schaltwalzenachse frei verdrehbar gelagert" umfasst sein.

Gemäß einer weiteren insgesamt bevorzugten Ausführungsform weist der Schaltwalzenkörper im Bereich von einer Stirnseite eine axiale Schaltwalzentasche auf, in die hinein sich ein erster Nocken des Anschlagelementes erstreckt, wobei die Schaltwalzentasche in Drehrichtung bzw. in Umfangsrichtung länger ist als der erste Nocken (bzw. sich in Umfangsrichtung über einen größeren Winkelbereich erstreckt als der erste Nocken), so dass das Anschlagelement in Drehrichtung begrenzt beweglich in Bezug auf den Schaltwalzenkörper gelagert ist.

Die Schaltwalzentasche erstreckt sich vorzugsweise über eine Umfangslänge, die der Umfangslänge des ersten Nockens entspricht, zuzüglich einem zusätzlichen Verdrehwinkel von beispielsweise 3° bis 357°.

Durch die Schaltwalzentasche kann die relative begrenzte Verdrehbarkeit des Anschlagelementes in Bezug auf den Schaltwalzenkörper konstruktiv einfach realisiert werden.

Gemäß einer weiteren bevorzugten Ausführungsform weist das Anschlagelement eine erste Anschlagelement-Anschlagfläche und eine zweite Anschlagelement-Anschlagfläche auf, die in Drehrichtung um einen Winkel in einem Bereich von 1° bis 30° voneinander beabstandet sind.

Besonders bevorzugt bilden die erste Anschlagelement-Anschlagfläche und die zweite Anschlagelement-Anschlagfläche in Umfangsrichtung voneinander beabstandete Flächen eines ersten Nockens des Anschlagelementes.

Gemäß einer weiteren bevorzugten Ausführungsform weist das Anschlagelement einen zweiten Nocken auf, der in axialer Richtung vorsteht und der eine dritte Anschlagelement-Anschlagfläche und eine vierte Anschlagelement-Anschlagfläche aufweist, die in Drehrichtung um einen weiteren Winkel in einem Bereich von 1° bis 30° voneinander beabstandet sind.

Vorzugsweise sind die dritte Anschlagelement-Anschlagfläche und die vierte Anschlagelement-Anschlagfläche in Drehrichtung über einen Winkel voneinander beabstandet, der identisch ist zu einem Winkel, um den die erste Anschlagelement-Anschlagfläche und die zweite Anschlagelement-Anschlagfläche in Drehrichtung voneinander beabstandet sind.

Der zweite Nocken erstreckt sich vorzugsweise in axialer Richtung von einem Grundkörper des Anschlagelementes weg, und zwar weg von dem Schaltwalzenkörper und hin zu einer möglichen Anordnung eines Referenzelementes, insbesondere hin zu einer Gehäusewand, an der ein Referenzelement wie ein Gehäuseanschlag ausgebildet ist.

Ferner ist es bevorzugt, wenn der erste Nocken und der zweite Nocken in Drehrichtung gleich lang sind bzw. sich über den gleichen Winkelbereich erstrecken. Alternativ oder zusätzlich hierzu sind der erste Nocken und der zweite Nocken in Drehrichtung um einen Versatzbereich versetzt, der größer gleich der Länge des ersten oder des zweiten Nockens in Drehrichtung ist.

Durch das Versetzen des ersten Nockens und des zweiten Nockens in Drehrichtung ist es möglich, das Anschlagelement mit einer im Wesentlichen einheitlichen Dicke zu realisieren, so dass sich fertigungstechnische Vorteile ergeben können und/oder Vorteile hinsichtlich der Gesamtfestigkeit.

Gemäß einer weiteren bevorzugten Ausführungsform ist das Anschlagelement an dem Schaltwalzenkörper axial gelagert.

Die axiale Lagerung beinhaltet dabei vorzugsweise eine Verliersicherheitsfunktion in axialer Richtung, und zwar vorzugsweise in beide axial entgegengesetzte Richtungen. Die Axiallagerung muss dabei keine Kraftübertragungsfunktion ermöglichen, sondern dient lediglich einer erhöhten Funktionssicherheit hinsichtlich Transport und Montage.

Zur Realisierung der Axiallagerung kann der Schaltwalzenkörper eine Radialnut aufweisen, in die sich radial erstreckender Axialsicherungsvorsprung des Anschlagelementes greift.

Bei der erfindungsgemäßen Getriebeanordnung ist es von Vorteil, wenn das Gehäuse einen Gehäuseanschlag aufweist, der ein Referenzelement mit zwei in Drehrichtung versetzt angeordneten Gehäuse-Anschlagflächen bildet, gegen die das Anschlagelement in einer ersten Referenzposition bzw. in einer zweiten Referenzposition anschlägt.

Der Gehäuseanschlag kann beispielsweise als radialer Vorsprung gegenüber einer Schaltwalzenachsenaufnahme ausgebildet sein. Eine erste Gehäuse-Anschlagfläche ist dabei vorzugsweise der dritten Anschlagelement-Anschlagfläche zugeordnet, und eine zweite Gehäuse-Anschlagfläche ist vorzugsweise der vierten Anschlagelement-Anschlagfläche zugeordnet.

Das Anschlagelement kann beispielsweise ein robustes Sintermetallelement sein. Das Ausbilden von vergleichsweise großen Nocken ist hierdurch realisierbar, insbesondere durch Sintern.

Eine in Umfangsrichtung versetzte Anordnung der Nocken erleichtert den Sinterprozess. Obgleich in manchen Fällen eine Vergrößerung der Verdrehbarkeit ermöglicht wird, kann die vorliegende Erfindung auch eine Vergrößerung eines Gehäuseanschlages in Umfangsrichtung ermöglichen, was zu einer höheren Robustheit der Anschlagfunktion führen kann.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:

Fig. 1 eine schematische Darstellung eines Antriebsstranges eines Kraftfahrzeuges mit einer Getriebeanordnung und einer beispielhaften Ausführungsform einer erfindungsgemäßen Schaltwalzenanordnung;

Fig. 2 eine schematische Schnittdarstellung entlang einer Linie II-II in Fig. 1;

Fig. 3 eine schematische perspektivische Explosionsansicht einer weiteren Ausführungsform einer erfindungsgemäßen Schaltwalzenanordnung;

Fig. 4 eine perspektivische Ansicht einer weiteren Ausführungsform einer erfindungsgemäßen Schaltwalzenanordnung; und

Fig. 5 ein Anschlagelement der Schaltwalzenanordnung der Fig. 4.

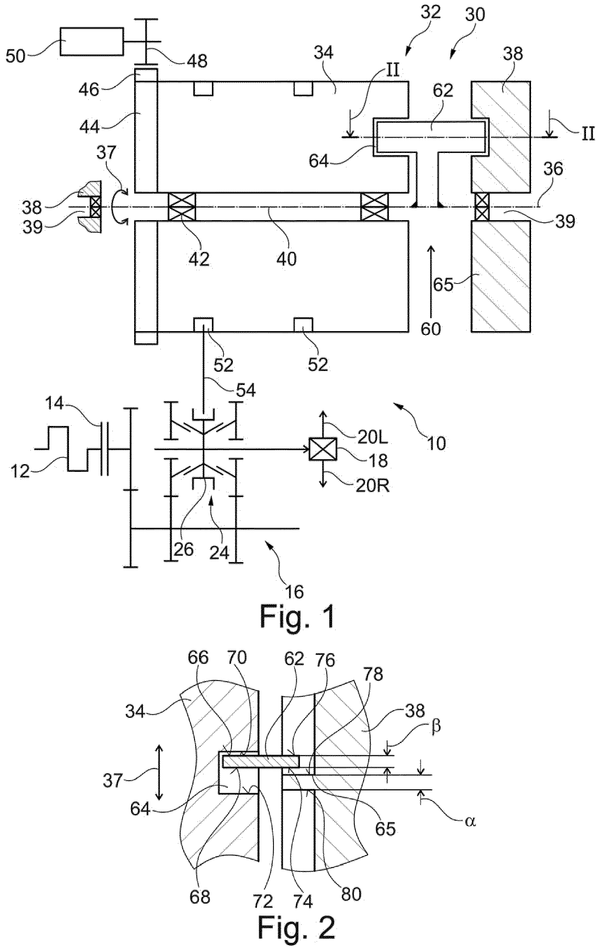

In Fig. 1 ist ein Antriebsstrang für ein Kraftfahrzeug schematisch dargestellt und generell mit 10 bezeichnet. Der Antriebsstrang 10 weist einen Antriebsmotor 12 auf, der durch einen Verbrennungsmotor oder durch eine Hybrid-Antriebseinheit gebildet sein kann. Ferner beinhaltet der Antriebsstrang 10 gewöhnlich eine Kupplungsanordnung, die als Einfachkupplung oder auch als Doppelkupplung realisiert sein kann. Eingangsseitig ist die Kupplungsanordnung 14 mit dem Antriebsmotor 12 verbunden. Ausgangsseitig ist die Kupplungsanordnung 14 mit einer Getriebeanordnung 16 zum Einrichten einer Mehrzahl von Gangstufen verbunden, wobei die Getriebeanordnung 16 in Fig. 1 schematisch als Stufengetriebe in Vorgelegebauweise dargestellt ist. Ein Ausgang der Getriebeanordnung 16 ist mit einem Differenzial 18 verbunden, mittels dessen Antriebsleistung auf angetriebene Räder 20L, 20R verteilbar ist.

Die Getriebeanordnung 16 weist zum Einrichten der unterschiedlichen Gangstufen eine Mehrzahl von Schaltkupplungen auf, von denen eine Schaltkupplungsanordnung in Form eines Schaltkupplungspaketes in Fig. 1 schematisch bei 24 dargestellt ist. Die Schaltkupplungsanordnung 24 dient alternativ dazu, einen ersten oder einen zweiten Radsatz (in Fig. 1 nicht näher bezeichnet) in den Leistungsfluss zu bringen. Die Schaltkupplungsanordnung 24 wird mittels einer Schaltmuffe 26 geschaltet, derart, dass entweder der eine Radsatz oder der andere Radsatz in den Leistungsfluss versetzbar ist, oder eine Neutralstellung der Schaltwalzenanordnung einrichtbar ist.

Zum axialen Bewegen und folglich Schalten der Schaltmuffe 26 und gegebenenfalls weiterer Schaltmuffen von weiteren Schaltkupplungsanordnungen der Getriebeanordnung 16 beinhaltet die Getriebeanordnung 16 eine Schaltvorrichtung 30. Die Schaltvorrichtung 30 ist als Schaltaktuatorik realisiert, derart, dass Gangstufen der Getriebeanordnung 16 automatisiert gewechselt werde können. Die Schaltvorrichtung 30 beinhaltet eine Schaltwalzenanordnung 32. Die Schaltwalzenanordnung 32 weist einen Schaltwalzenkörper 34 auf, der in einer Drehrichtung 37 um eine Drehachse 36 herum verdrehbar gelagert ist, und zwar verdrehbar in Bezug auf ein Gehäuse 38. Das Gehäuse 38 kann beispielsweise ein Gehäuse der Getriebeanordnung 16 sein.

An dem Gehäuse 38 können ein oder mehrere Schaltwalzenachsenaufnahmen 39 ausgebildet sein, in denen eine Schaltwalzenachse 40 aufgenommen ist. Die Schaltwalzenachse 40 kann beispielsweise als eine Schaltwalzenwelle ausgebildet sein, die über eine nicht näher bezeichnete Lageranordnung verdrehbar in der Schaltwalzenachsenaufnahme 39 gelagert ist. Die Schaltwalzenachse 40 kann jedoch auch durch einen gehäusefesten Lagerstift gebildet sein, der gehäusefest in den Schaltwalzenachsenaufnahmen 39 festgelegt ist.

In einer bevorzugten Ausführungsform ist der Schaltwalzenkörper 34 über eine Schaltwalzenlageranordnung 42 verdrehbar in Bezug auf die Schaltwalzenachse 40 gelagert. Generell ist es jedoch auch denkbar, dass der Schaltwalzenkörper 34 fest mit einer Schaltwalzenwelle verbunden ist, die wiederum verdrehbar in Bezug auf das Gehäuse 38 gelagert ist.

Der Schaltwalzenkörper 34 ist mit einem Antriebsglied 44 verbunden, und zwar an einer axialen Stirnseite hiervon. Das Antriebsglied 44 kann beispielsweise durch ein Zahnrad gebildet sein, das eine Außenverzahnung 46 aufweist. Die Außenverzahnung 46 des Antriebsgliedes 44 kann beispielsweise mit einem Antriebsritzel 48 eines Schaltwalzenmotors 50 in Eingriff stehen. Der Schaltwalzenmotor 50 kann beispielsweise ein elektrischer Motor sein. Durch Ansteuern des Schaltwalzenmotors 50 kann der Schaltwalzenkörper 34 folglich in Rotation in Bezug auf das Gehäuse 38 versetzt werden.

An dem Außenumfang des Schaltwalzenkörpers 34 ist wenigstens eine Schaltwalzennut 52 ausgebildet, es können jedoch auch mehrere Nuten 52 daran ausgebildet sein. In eine Schaltwalzennut 52 greift wenigstens ein Mitnehmer 54, der zudem an der Schaltmuffe 26 angreift. Ein Verdrehen des Schaltwalzenkörpers 34 führt bei geeigneter Ausführung der Schaltwalzennut 52 folglich zu einem axialen Versatz des Mitnehmers 54 und folglich zu einem axialen Versatz der Schaltmuffe 26, was mit dem Ein- oder Auslegen einer Gangstufe einhergeht.

Um die Drehstellung des Schaltwalzenkörpers 34 referenzieren zu können, beinhaltet die Schaltwalzenanordnung 32 eine Anschlageinrichtung 60. Die Anschlageinrichtung 60 weist ein Anschlagelement 62 auf, das so ausgebildet ist, dass es in einer ersten Referenzposition in Kontakt kommen kann mit einem Referenzelement, insbesondere mit einem Gehäuseanschlag 65, wobei das Anschlagelement 62 in Drehrichtung begrenzt verdrehbar in Bezug auf den Schaltwalzenkörper 34 gelagert ist.

Das Anschlagelement 62 greift mit einem in Fig. 1 nicht näher bezeichneten ersten Nocken in eine Schaltwalzentasche 64 des Schaltwalzenkörpers 34, wobei die Schaltwalzentasche 64 im Bereich einer axialen Stirnseite des Schaltwalzenkörpers ausgebildet ist, und zwar vorzugsweise auf einer dem Antriebsglied 44 axial gegenüberliegenden Stirnseite.

Das Anschlagelement 62 ist generell frei beweglich in Bezug auf den Schaltwalzenkörper 34 gelagert. Dies kann dadurch erfolgen, dass das Anschlagelement 62 verdrehfest mit der Schaltwalzenachse 40 verbunden ist, sofern diese verdrehbar an dem Gehäuse 38 gelagert ist. Andererseits kann das Anschlagelement 62 auch verdrehbar an der Schaltwalzenachse 40 gelagert sein, wenn diese beispielsweise als gehäusefester Lagerstift ausgebildet ist. Generell ist es auch denkbar, dass das Anschlagelement 62 ausschließlich verdrehbar in Bezug auf den Schaltwalzenkörper 34 gelagert ist und nicht an der Schaltwalzenachse 40 gelagert ist.

Wie es in Fig. 2 dargestellt ist, bei der es sich um einen schematischen Schnitt in der Darstellung einer Abwicklung handelt, ist der Gehäuseanschlag 65 als gegenüber einer radialen Gehäusewand des Gehäuses 38 axial vorstehender Abschnitt ausgebildet. Der Gehäuseanschlag 65 ist in Fig. 1 schematisch als axialer bzw. radialer Vorsprung in einer ringförmigen Axialnut des Gehäuses 38 dargestellt.

Die Schaltwalzentasche 64, in die ein erster Nocken des Anschlagelementes 62 greift, ist in Drehrichtung länger ausgebildet als der erste Nocken, so dass das Anschlagelement in Drehrichtung begrenzt beweglich in Bezug auf den Schaltwalzenkörper gelagert ist.

Genauer gesagt weist das Anschlagelement 62 im Bereich des ersten Nockens eine erste Anschlagelement-Anschlagfläche 66 und auf einer in Umfangsrichtung gegenüberliegenden Seite des ersten Nockens eine zweite Anschlagelement-Anschlagfläche 68 auf. Die Schaltwalzentasche 64 weist in Umfangsrichtung versetzt eine erste Schaltwalzen-Anschlagfläche 70 und eine zweite Schaltwalzen-Anschlagfläche 72 auf. Die Schaltwalzen-Anschlagflächen 70, 72 sind über einen größeren Winkelbereich beabstandet als die erste und die zweite Anschlagelement-Anschlagfläche 66, 68, derart, das das Anschlagelement 62 in Dreh- bzw. Umfangsrichtung über einen Winkel frei beweglich in Bezug auf den Schaltwalzenkörper 34 gelagert ist, der in Fig. 2 mit $\alpha$ bezeichnet ist. Der Winkel, um den die erste Anschlagelement-Anschlagfläche 66 und die zweite Anschlagelement-Anschlagfläche 68 voneinander beabstandet sind, ist in Fig. 2 bei $\beta$ gezeigt.

An einem axial gegenüberliegenden Ende weist das Anschlagelement 62 einen zweiten Nocken auf, an dem eine dritte Anschlagelement-Anschlagfläche 74 und eine vierte Anschlagelement-Anschlagfläche 76 ausgebildet sind. Die dritte und die vierte Anschlagelement-Anschlagfläche 74, 76 können um den gleichen Winkel $\beta$ voneinander beabstandet sein wie die erste und die zweite Anschlagelement-Anschlagfläche 66, 68.

Der Gehäuseanschlag 65 weist eine erste Gehäuse-Anschlagfläche 78 und eine zweite Gehäuse-Anschlagfläche 80 auf, die in Umfangsrichtung voneinander beabstandet sind, vorzugsweise um einen Winkel, der dem Winkel $\beta$ entsprechen kann. Vorzugsweise ist der Winkel $\alpha$ größer gleich dem Winkel $\beta$.

Gegenüber einer Ausführungsform, bei der das Anschlagelement 62 starr mit dem Schaltwalzenkörper 34 verbunden ist, ergibt sich eine Vergrößerung des maximalen Verdrehwinkels des Schaltwalzenkörpers 34 um den Wert $\alpha$, also um den Wert, um den das Anschlagelement 62 verdrehbar in Bezug auf den Schaltwalzenkörper 34 gelagert ist.

In einer ersten Referenzposition, die in Fig. 2 dargestellt ist, liegt die erste Anschlagelement-Anschlagfläche 66 an der ersten Schaltwalzen-Anschlagfläche 70 an, und die dritte Anschlagelement-Anschlagfläche 74 liegt an der ersten Gehäuse-Anschlagfläche 78 an. Hierdurch ist in Umfangsrichtung ein Formschluss zwischen Gehäuse 38 und Schaltwalzenkörper 34 eingerichtet, so dass diese Position als Referenzposition zum Referenzieren einer Drehstellung des Schaltwalzenkörpers verwendbar ist.

Aus dieser Position heraus lässt sich die Schaltwalze in eine einzige Richtung verdrehen, und zwar bis die vierte Anschlagelement-Anschlagfläche 76 an die zweite Gehäuse-Anschlagfläche 80 anschlägt. Dies bedingt dann auch ein Umschlagen des ersten Nockens des Anschlagelementes 62 innerhalb der Schaltwalzentasche 64, so dass die zweite Anschlagelement-Anschlagfläche 68 in Kontakt gelangt mit der zweiten Schaltwalzen-Anschlagfläche 72. Der maximale Verdrehwinkel des Schaltwalzenkörpers 34 beträgt folglich 360° abzüglich der Umfangslänge bzw. des Umfangswinkels des Gehäuseanschlages 65. Wenn dieser beispielsweise 35° breit ist, dann kann der Schaltwalzenkörper 34 um 360°-35°=325° verdreht werden. Im Stand der Technik beträgt die maximale Verdrehbarkeit unter der Annahme, dass der Gehäuseanschlag 65 die gleiche Umfangsbreite von 35° hat, und das Anschlagelement 62 die gleiche Umfangslänge von 35° hat, der maximale mögliche Verdrehwinkel 290° (360°-2x35°=290°).

Nachfolgend werden weitere Ausführungsformen von Schaltwalzenanordnungen beschrieben, die hinsichtlich Aufbau und Funktionsweise generell der Schaltwalzenanordnung 32 der Fig. 1 und 2 entsprechen. Gleiche Elemente sind daher durch gleiche Bezugszeichen bezeichnet. Im Folgenden werden im Wesentlichen die Unterschiede erläutert.

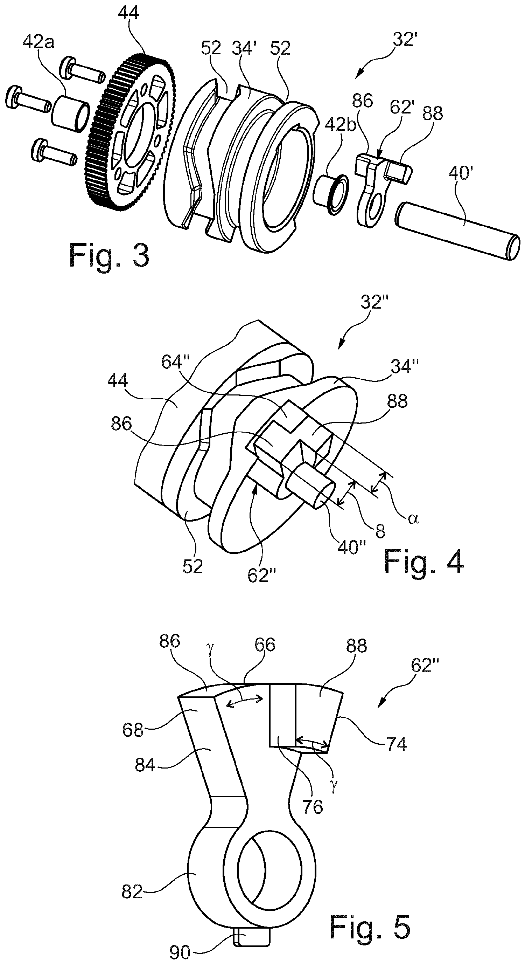

Fig. 3 zeigt eine Schaltwalzenanordnung 32' mit einem Schaltwalzenkörper 34', der zwei nebeneinander angeordnete Schaltwalzennuten 52 beinhaltet. Eine Schaltwalzenachse 40' ist als Stift ausgebildet, der verdrehbar in Bezug auf das Gehäuse gelagert sein kann. Das Antriebsglied 44 ist mittels nicht näher bezeichneter Schrauben an einer Stirnseite des Schaltwalzenkörpers 34' festgelegt. Der Schaltwalzenkörper 34' ist über zwei axial voneinander beabstandete Lagerhülsen 42a, 42b verdrehbar in Bezug auf die Schaltwalzenachse 40' gelagert. Das Anschlagelement 62' weist einen Ringabschnitt auf, mittels dessen das Anschlagelement 62' auf die Schaltwalzenachse 40' aufgepresst sein kann. Ferner weist das Anschlagelement 62' einen ersten Nocken 86 auf, der in eine in Fig. 3 nicht näher bezeichnete Schaltwalzentasche 64 greift, sowie einen zweiten Nocken 88, der sich gegenüber dem Ringabschnitt des Anschlagelementes 62' in eine dem ersten Nocken 86 gegenüberliegende axiale Richtung erstreckt. Der zweite Nocken 88 ist zum Anschlag an einen Gehäuseanschlag 65 ausgebildet, ähnlich wie der in Fig. 2 nicht näher bezeichnete zweite Nocken des Anschlagelementes 62.

In den Fig. 4 und 5 ist eine weitere Ausführungsform einer Schaltwalzenanordnung 32" gezeigt, die einen Schaltwalzenkörper 34" aufweist, der eine einzelne Schaltwalzennut 52 beinhaltet. Auf einer axialen Seite ist das Antriebsglied 44 festgelegt. Auf der anderen axialen Stirnseite ist ein Anschlagelement 62" angeordnet, dessen erster Nocken 86 in eine Schaltwalzentasche 64" auf der anderen Stirnseite greift. Das Anschlagelement 62" kann mittels einer nicht näher dargestellten Lagerhülse verdrehbar in Bezug auf die Schaltwalzenachse 40" gelagert sein, derart, dass die Schaltwalzenachse 40" auch als gehäusefeste Achse realisiert sein kann.

Das Anschlagelement 62" ist in Fig. 5 in größerer Genauigkeit dargestellt. Das Anschlagelement 62" beinhaltet einen Ringabschnitt 82, der auf die Schaltwalzenachse 40 aufgeschoben werden kann. Ferner weist das Anschlagelement 62" einen sich von dem Ringabschnitt 82 radial erstreckenden Nasenabschnitt 84 auf, an dessen radialem Ende ein erster Nocken 86 und ein zweiter Nocken 88 ausgebildet sind. Der erste Nocken 86 ist zum Eingriff in eine Schaltwalzentasche 64" ausgebildet. Der zweite Nocken 88 ist im Gehäuseanschlag 65 ausgebildet. Es ist zu erkennen, dass die Nocken 86, 88 in Umfangsrichtung um einen Winkel $\gamma$ voneinander versetzt sind. Der Winkel $\gamma$ dient dazu, eine Materialanhäufung im Bereich der Nocken zu vermeiden, so dass das Anschlagelement 62" gut sinterbar ist. Die Erstreckung des ersten Nockens 86 und des zweiten Nockens 88 in Umfangsrichtung kann dabei im Wesentlichen identisch sein zu dem Winkel $\gamma$. Ferner ist der Winkel $\alpha$, der in Bezug auf Fig. 2 beschrieben worden ist, vorzugsweise größer gleich dem Winkel $\gamma$.

Das Anschlagelement 62" weist auf einer dem Nasenabschnitt 84 radial gegenüberliegenden Seite des Ringabschnittes 82 einen Axialsicherungsvorsprung 90 auf, der in eine nicht näher bezeichnete Radialnut des Schaltwalzenkörpers 34' greift, wenn das Anschlagelement 62" an dem Schaltwalzenkörper 34" montiert ist. Das Zusammenwirken von Axialsicherungsvorsprung 90 und Radialnut bildet eine Axiallagerung für das Anschlagelement 62", die jedoch rein einer besseren Transportierbarkeit sowie einer besseren Montierbarkeit dient und insbesondere keine Kräfte übertragen muss.

**Bezugszeichenliste**

| | |
|---|---|
| 10 | Antriebsstrang |
| 12 | Antriebsmotor |
| 14 | Kupplungsanordnung |
| 16 | Getriebeanordnung |
| 18 | Differential |
| 20 | Angetriebene Räder |
| 24 | Schaltkupplungsanordnung |
| 26 | Schaltmuffe |
| 30 | Schaltvorrichtung |
| 32 | Schaltwalzenanordnung |
| 34 | Schaltwalzenkörper |
| 36 | Drehachse |
| 37 | Drehrichtung |
| 38 | Gehäuse |
| 39 | Schaltwalzenachsenaufnahme |
| 40 | Schaltwalzenachse |
| 42 | Schaltwalzenlageranordnung |
| 44 | Antriebsglied |
| 46 | Verzahnung |
| 48 | Antriebsritzel |
| 50 | Schaltwalzenmotor |
| 52 | Schaltwalzennut(en) |
| 54 | Mitnehmer |
| 60 | Anschlageinrichtung |
| 62 | Anschlagelement |
| 64 | Schaltwalzentasche |
| 65 | Gehäuseanschlag |
| 66 | Erste Anschlagelement-Anschlagfläche |

68 Zweite Anschlagelement-Anschlagfläche
70 Erste Schaltwalzen-Anschlagfläche
72 Zweite Schaltwalzen-Anschlagfläche
74 Dritte Anschlagelement-Anschlagfläche
76 Vierte Anschlagelement-Anschlagfläche
78 Erste Gehäuse-Anschlagfläche
80 Zweite Gehäuse-Anschlagfläche
82 Ringabschnitt
84 Nasenabschnitt
86 Erster Nocken
88 Zweiter Nocken
90 Axialsicherungsvorsprung

**Patentansprüche**

1. Schaltwalzenanordnung (32) für eine Schaltvorrichtung (30) einer Getriebeanordnung (16) für Kraftfahrzeuge, mit einem Schaltwalzenkörper (34), der um eine Schaltwalzenachse (40) drehbar ist, und mit einer Anschlageinrichtung (60) zum Referenzieren einer Drehstellung des Schaltwalzenkörpers (34), wobei die Anschlageinrichtung (60) ein Anschlagelement (62) aufweist, das so ausgebildet ist, dass es in einer ersten Referenzposition in Kontakt kommen kann mit einem Gehäuseanschlag (65), **dadurch gekennzeichnet, dass** das Anschlagelement (62) in Drehrichtung begrenzt verdrehbar in Bezug auf den Schaltwalzenkörper (34) gelagert ist.

2. Schaltwalzenanordnung nach Anspruch 1, **dadurch gekennzeichnet, dass** das Anschlagelement (62) in Bezug auf den Schaltwalzenkörper (34) über einen Winkelbereich ($\alpha$) frei drehbar ist, der größer ist als 3° und/oder kleiner ist als 37° oder größer ist als 6° und/oder kleiner ist als 35°.

3. Schaltwalzenanordnung nach Anspruch 2, **dadurch gekennzeichnet, dass** der Winkelbereich ($\alpha$) größer gleich einem Winkelbereich ($\beta$) ist, über den sich das Gehäuseanschlag (65) erstreckt.

4. Schaltwalzenanordnung nach einem der Ansprüche 1 - 3, **dadurch gekennzeichnet, dass** der Schaltwalzenkörper (34) an einer Schaltwalzenachse (40) frei verdrehbar gelagert ist und/oder das Anschlagelement (62) an einer bzw. an der Schaltwalzenachse (40) frei verdrehbar gelagert ist.

5. Schaltwalzenanordnung nach einem der Ansprüche 1 - 4, **dadurch gekennzeichnet, dass** der Schaltwalzenkörper (34) im Bereich von einer Stirnseite eine axiale Schaltwalzentasche (64) aufweist, in die hinein sich ein erster Nocken (86) des Anschlagelementes (62) erstreckt, wobei die Schaltwalzentasche (64) in Drehrichtung länger ist als der erste Nocken (86), so dass das Anschlagelement (62) in Drehrichtung begrenzt beweglich in Bezug auf den Schaltwalzenkörper (34) gelagert ist.

6. Schaltwalzenanordnung nach Anspruch 5, **dadurch gekennzeichnet, dass** das Anschlagelement (62) eine erste Anschlagelement-Anschlagfläche (66) und eine zweite Anschlagelement-Anschlagfläche (68) aufweist, die in Drehrichtung um einen Winkel ($\gamma$) in einem Bereich von 1° bis 30° voneinander beabstandet sind.

7. Schaltwalzenanordnung nach einem der Ansprüche 1 - 6, **dadurch gekennzeichnet, dass** das Anschlagelement (62) einen zweiten Nocken (88) aufweist, der in axialer Richtung vorsteht und der eine dritte Anschlagelement-Anschlagfläche (74) und eine vierte Anschlagelement-Anschlagfläche (76) aufweist, die in Drehrichtung um einen Winkel ($\gamma$) in einem Bereich von 1° bis 30° voneinander beabstandet sind.

8. Schaltwalzenanordnung nach Anspruch 5 und nach Anspruch 7, **dadurch gekennzeichnet, dass** der erste Nocken (86) und der zweite Nocken (88) in Drehrichtung gleich lang sind und/oder der erste Nocken (86) und der zweite Nocken (88) in Drehrichtung um einen Versatzbereich ($\gamma$) versetzt sind, der größer gleich der Länge des ersten oder des zweiten Nockens (86, 88) in Drehrichtung ist.

9. Schaltwalzenanordnung nach einem der Ansprüche 1 - 8, **dadurch gekennzeichnet, dass** das Anschlagelement (62) an dem Schaltwalzenkörper (34) axial gelagert ist.

10. Getriebeanordnung (16) für ein Kraftfahrzeug, mit einem Gehäuse (38), mit einer Schaltvorrichtung (30) zum Schalten von Gangstufen, **dadurch gekennzeichnet, dass** die Schaltvorrichtung (30) eine Schaltwalzenanordnung (32) nach einem der Ansprüche 1 - 9 aufweist.

11. Getriebeanordnung nach Anspruch 10, **dadurch gekennzeichnet, dass** das Gehäuse (38) einen Gehäuseanschlag (65) aufweist, der ein Referenzelement mit zwei in Drehrichtung versetzt angeordneten Gehäuse-Anschlagflächen (78, 80) bildet, gegen die das Anschlagelement (62) in einer ersten Referenzposition bzw. in einer zweiten Referenzposition anschlägt.

**Claims**

1. Shift drum arrangement (32) for a shifting apparatus (30) of a transmission arrangement (16) for motor vehicles, with a shift drum body (34) which can be rotated about a shift drum axis (40), and with a stop device (60) for referencing a rotational position of the shift drum body (34), the stop device (60) having a stop element (62) which is configured in such a way that it can come into contact with a housing stop (65) in a first reference position, **characterized in that** the stop element (62) is mounted such that it can be rotated to a limited extent in the rotational direction in relation to the shift drum body (34).

2. Shift drum arrangement according to Claim 1, **characterized in that**, in relation to the shift drum body (34), the stop element (62) can be rotated freely over an angular range (α) which is greater than 3° and/or smaller than 37°, or is greater than 6° and/or smaller than 35°.

3. Shift drum arrangement according to Claim 2, **characterized in that** the angular range (α) is greater than or equal to an angular range (β), over which the housing stop (65) extends.

4. Shift drum arrangement according to one of Claims 1 to 3, **characterized in that** the shift drum body (34) is mounted such that it can be rotated freely on a shift drum axis (40), and/or the stop element (62) being mounted such that it can be rotated freely on a or the shift drum axis (40).

5. Shift drum arrangement according to one of Claims 1 to 4, **characterized in that**, in the region of one end side, the shift drum body (34) has an axial shift drum pocket (64), into which a first cam (86) of the stop element (62) extends, the shift drum pocket (64) being longer in the rotational direction than the first cam (86), with the result that the stop element (62) is mounted such that it can be moved to a limited extent in the rotational direction in relation to the shift drum body (34).

6. Shift drum arrangement according to Claim 5, **characterized in that** the stop element (62) has a first stop element stop face (66) and a second stop element stop face (68) which are spaced apart from one another in the rotational direction by an angle (γ) in a range of from 1 ° to 30°.

7. Shift drum arrangement according to one of Claims 1 to 6, **characterized in that** the stop element (62) has a second cam (88) which projects in the axial direction and which has a third stop element stop face (74) and a fourth stop element stop face (76) which are spaced apart from one another in the rotational direction by an angle (γ) in a range of from 1° to 30°.

8. Shift drum arrangement according to Claim 5 and according to Claim 7, **characterized in that** the first cam (86) and the second cam (88) are of equal length in the rotational direction, and/or the first cam (86) and the second cam (88) are offset in the rotational direction by an offset range (γ) which is greater than or equal to the length of the first or the second cam (86, 88) in the rotational direction.

9. Shift drum arrangement according to one of Claims 1 to 8, **characterized in that** the stop element (62) is mounted axially on the shift drum body (34).

10. Transmission arrangement (16) for a motor vehicle, with a housing (38), with a shifting apparatus (30) for shifting gear stages, **characterized in that** the shifting apparatus (30) has a shift drum arrangement (32) according to one of Claims 1 to 9.

11. Transmission arrangement according to Claim 10, **characterized in that** the housing (38) has a housing stop (65) which forms a reference element with two housing stop faces (78, 80) which are arranged offset in the rotational direction and against which the stop element (62) bears in a first reference position and in a second reference position, respectively.

**Revendications**

1. Dispositif à tambour de changement de rapport (32) pour un dispositif de changement de vitesse (30) d'un dispositif de transmission (16) pour des véhicules automobiles, comprenant un corps de tambour de changement de rapport (34) pouvant tourner autour d'un axe de tambour de changement de rapport (40), et un dispositif de butée (60) pour référencer une position de rotation du corps de tambour de changement de rapport (34), le dispositif de butée (60) présentant un élément de butée (62) qui est réalisé de telle sorte que dans une première position de référence, il peut entrer en contact avec une butée de carter (65), **caractérisé en ce que** l'élément de butée (62) est monté à rotation limitée dans la direction de rotation par rapport au corps de tambour de changement de rapport (34).

2. Dispositif à tambour de changement de rapport selon la revendication 1, **caractérisé en ce que** l'élément de butée (62) peut tourner librement par rapport au corps de tambour de changement de rapport (34) sur une plage angulaire (α) qui est supérieure à 3° et/ou inférieure à 37° ou supérieure à 6° et/ou inférieure à 35°.

3. Dispositif à tambour de changement de rapport selon la revendication 2, **caractérisé en ce que** la plage angulaire (α) est supérieure ou égale à une plage angulaire (β) sur laquelle s'étend la butée de carter (65).

**4.** Dispositif à tambour de changement de rapport selon l'une quelconque des revendications 1 à 3, **caractérisé en ce que** le corps de tambour de changement de rapport (34) est monté en rotation libre sur un axe de tambour de changement de rapport (40) et/ou l'élément de butée (62) est monté en rotation libre sur un ou sur ledit axe de tambour de changement de rapport (40).

**5.** Dispositif à tambour de changement de rapport selon l'une quelconque des revendications 1 à 4, **caractérisé en ce que** le corps de tambour de changement de rapport (34) présente au niveau d'une face frontale une poche de tambour de changement de rapport axiale (64) à l'intérieur de laquelle s'étend une première came (86) de l'élément de butée (62), la poche de tambour de changement de rapport (64) étant plus longue dans la direction de rotation que la première came (86) de sorte que l'élément de butée (62) est monté à mobilité limitée dans la direction de rotation par rapport au corps de tambour de changement de rapport (34).

**6.** Dispositif à tambour de changement de rapport selon la revendication 5, **caractérisé en ce que** l'élément de butée (62) présente une première surface de butée d'élément de butée (66) et une deuxième surface de butée d'élément de butée (68) qui sont espacées l'une de l'autre dans la direction de rotation d'un angle (γ) dans une plage de 1° à 30°.

**7.** Dispositif à tambour de changement de rapport selon l'une quelconque des revendications 1 à 6, **caractérisé en ce que** l'élément de butée (62) présente une deuxième came (88) qui fait saillie dans la direction axiale et qui présente une troisième surface de butée d'élément de butée (74) et une quatrième surface de butée d'élément de butée (76) qui sont espacées l'une de l'autre dans la direction de rotation selon un angle (γ) dans une plage de 1° à 30°.

**8.** Dispositif à tambour de changement de rapport selon la revendication 5 et selon la revendication 7, **caractérisé en ce que** la première came (86) et la deuxième came (88) ont la même longueur dans la direction de rotation et/ou la première came (86) et la deuxième came (88) sont décalées dans la direction de rotation d'une plage de décalage (γ) qui est supérieure ou égale à la longueur de la première ou de la deuxième came (86, 88) dans la direction de rotation.

**9.** Dispositif à tambour de changement de rapport selon l'une quelconque des revendications 1 à 8, **caractérisé en ce que** l'élément de butée (62) est monté axialement sur le corps de tambour de changement de rapport (34).

**10.** Dispositif de transmission (16) pour un véhicule automobile, comprenant un carter (38), un dispositif de changement de vitesse (30) pour changer de rapport, **caractérisé en ce que** le dispositif de changement de vitesse (30) présente un dispositif à tambour de changement de rapport (32) selon l'une quelconque des revendications 1 à 9.

**11.** Dispositif de transmission selon la revendication 10, **caractérisé en ce que** le carter (38) présente une butée de carter (65) qui constitue un élément de référence avec deux surfaces de butée de carter (78, 80) disposées de manière décalée dans la direction de rotation, contre lesquelles l'élément de butée (62) vient en butée dans une première position de référence ou dans une deuxième position de référence, respectivement.

Fig. 1

Fig. 2

## Fig. 3

## Fig. 4

## Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19655083 B4
- WO 9702963 A
- WO 02066870 A1
- WO 2015149797 A1
- DE 10113161 A1
- EP 1286088 A1
- DE 102016124403 A1
- DE 69216375 T5
- DE 102013221058 A1